# EUROPEAN PATENT APPLICATION

(11) **EP 1 731 953 A1**
(43) Date of publication of application: **13.12.2006**
(21) Application number: 05104918.7
(22) Date of filing: 07.06.2005
(51) Int. Cl.: G02F 1/1335

(54) **Improved Visibility Display Device using an Index-Matching Scheme**

(71) Applicant: Sony Ericsson Mobile Communications AB, 221 88 Lund (SE)
(72) Inventor: Hunt, Alexander, 212 17 Malmö (SE); Ek, Martin, 240 10 Dalby (SE); Grip, Martin, 211 30 Malmö (SE)
(74) Representative: Lindberg, Olle Nils Olof

(57) **Abstract**

Display module (10) for use in an electronic device, comprising a front window (12) and a display unit (13,100), wherein an intermediate layer (24) of a transparent material is sandwiched between said front window (12) and the display unit (13,100). The intermediate layer (24) being formed by a material selected in dependence of the material of the front window (12) in order to minimize reflection in the interface between said front window (12) and said intermediate layer (24). The intermediate layer (24) consists of one or more layers whose refractive indices are chosen so that they closely match the refractive indices of the front window or the display unit.

## Description

### Technical field of the invention

The present invention relates to an arrangement for display modules for use in electronic devices, such as portable radio communication terminals. In particular, the present invention is concerned with display modules having improved brightness and reflectance properties, and with increased suitability for use in small size electronic devices.

### Description of related art

The first commercially attractive cellular telephones or terminals were introduced in the market at the end of the 1980's. Since then, a lot of effort has been made in making smaller terminals, with much help from the miniaturisation of electronic components and the development of more efficient batteries. Today, numerous manufacturers offer pocket-sized terminals with a wide variety of capabilities and services, such as packet-oriented transmission and multiple radio band coverage.

In mobile phones of today, a front window is typically used to protect the display unit, e.g. the liquid display module, from physical abuse, such as scratches, pressure and shocks, and from environmental strain. The front window is typically manufactured of a plastic material and between the display unit and the front window there is provided an air gap to make sure that the plastic window can bend or flex without touching the display unit. Usually a dust gasket is arranged to prevent dust from appearing between the display unit and the front window.

One problem with the prior art display modules is the luminance losses due to reflection of light in the interface between material layers in the display modules having different refraction indexes.

An aspect of the aforementioned problem is that roughly 12% of the backlight luminance, i.e. the light from the display unit to the viewer, will be lost before reaching the eye due to reflection in the interface between the display unit and the air gap, and in the interface between the air gap and the front window. If this 12% loss could be reduced it would be possible to lower the power consumption of the electronic device.

Another aspect of the aforementioned problem is that the outdoor performance of the display module is not optimal due to the low reflectance of light entering the display unit. In correspondence with the description regarding backlight, about 12% of the incident light will be lost and thus only 88% of the incident light will reach the display unit in the best case, i.e. when the angle of incidence is perpendicular to the display unit. A part of these 88% will then be reflected back from the display unit, e.g. a liquid crystal module (LCM). Commonly used liquid crystal modules normally reflect 3-5% of the incoming light. A rough calculation of the amount of reflected sunlight that carries the picture information from the display would be: 88% * 5% * 88% ≈ 3.9%. In other words, approximately 4% of the incoming sunlight will be reflected and will contain the picture information. This value should be compared with the 12% of the incoming light that is reflected before reaching the display unit and thus does not contain any picture information. When comparing 4% containing picture information and 12% without picture information it is understood that it can be hard to view the picture information, e.g. hard to read the information on the display. Consequently, a user of e.g. a mobile phone having a prior art display module, often has to shield off the display in order to be able to read the information, especially if the sunlight is strong.

The ratio between the reflected light containing picture information and the reflected light without picture information can be improved by using anti-reflex (AR) treated surfaces. However, anti-reflex treatment suffers from some drawbacks such as an expensive process that is sensitive for bad handling. If for example, the surface is not perfectly clean, the anti-reflex treatment will encapsulate all dust, finger prints, etc., which will be visible to a viewer. Further, in the prior art display modules, three surfaces need to be anti-reflex treated in order to provide a good result, i.e. the both surfaces, top and bottom, of the front window and the top surface of the liquid crystal display (LCD) polarizer have to be treated.

Another drawback with the prior art display modules is the risk of getting dust in the air gap between the front window and the display unit which may substantially deteriorate the image quality experienced by a user, causing customers to complain.

### Summary of the invention

An overall object of the present invention is to provide a display module having improved brightness and reflectance properties, and with increased suitability for use in small size electronic devices. More particular, an object of the invention is to overcome the above-mentioned problems and the aspects of the problems.

The objects of the invention are fulfilled by a display module for use in an electronic device, comprising a front window and a display unit. An intermediate layer of a transparent material is sandwiched between said front window and said display unit, said intermediate layer being formed by a material selected in dependence of the material of the front window in order to minimize reflection in the interface between said front window and said intermediate layer.

In one embodiment, said intermediate layer has a refraction index nᵢₗ that matches the refraction index n_{fw} of said front window.

In one embodiment, said display unit has a top portion having a refraction index matching the refraction index of the intermediate layer.

In one embodiment, said intermediate layer being constituted of sub-layers, wherein a top sub-layer has a refraction index that matches said front window, a bottom sub-layer has a refraction index that matches said display unit, and a possible intermediate sub-layer has a refraction index that matches both a sub-layer located above the intermediate sub-layer and a sub-layer located below the intermediate sub-layer.

In one embodiment, said intermediate layer is a transparent film.

In one embodiment, said intermediate layer is an immersion oil.

In one embodiment, said intermediate layer is a transparent glue.

In one embodiment, said display unit has a refraction index n_{d} substantially equal to the refraction index n_{fw} of said front window, said refraction indexes n_{d}, n_{fw} being approximately 1.5.

In one embodiment, said display unit and said intermediate layer are arranged air-tight.

In one embodiment, the top surface of said front window has an anti-reflex coating.

In one embodiment, said front window is attachable to a housing portion of said electronic device.

In one embodiment, said display module being attachable and detachable from an electronic device.

In one embodiment, said electronic device is a mobile radio terminal.

In one embodiment, said electronic device is a mobile phone.

The present invention also relates to an electronic device comprising the inventive display module.

The present invention has, among others, the following advantages:

In a typical embodiment, the luminance loss in reflections from the back light will only be 4% in the best case, i.e. when the angle of incidence is perpendicular and the material of the intermediate layer is selected in such a way that the refraction index of the intermediate layer matches the refraction indexes of the material of the front window and the display unit. Consequently, 96 % of the backlight luminance, containing the picture information, will reach the viewer. In correspondence, only 4% of the incoming light will be reflected without reaching the display unit and thus does not contain any picture information. Thus 96% of the incoming light will reach the display unit, and 96% * 5% * 96% ≈ 4.6% of the incoming light will be reflected from the display unit and contain the picture information. Consequently, the ratio between the reflected light containing picture information and the reflected light without picture information is improved.

When the transmitted light from back lighting is reduced, the power consumption of the display module can be reduced, and when the reflection of incoming light is reduced, the contrast in the image can be improved. Further, there will be no need for shielding or shadowing the display in order to be able to read the information on it.
a) The display module can be manufactured thinner since the air gap is removed, and consequently the electronic devices comprising the display module can also be made thinner.
b) The dust problem with the prior art display units can be removed by mounting the front window together with the display unit in e.g. a clean room to ensure good optical connection between the display unit and the front window.
c) If anti-reflex treatment is to be used in order to further improve the ratio between the reflected light containing picture information and the reflected light without picture information, only one surface, i.e. the top surface of the front window, has to be treated.

### Brief description of the drawings

The features and advantages of the present invention will be more apparent from the following description of the preferred embodiments with reference to the accompanying drawings, on which
Fig. 1 illustrates in a schematic way a cross-sectional view of a prior art display module having an air gap G between a front window and a top polarizer;
Fig. 2 illustrates schematically how incoming light I and reflected light R are reflected due to differences in refraction index between the different layers of the prior art display module of Fig. 1;
Fig. 3a illustrates schematically a cross-section of an embodiment of the inventive display module;
Fig. 4 illustrates schematically a cross-section of an embodiment of the inventive display module;
Fig. 5 illustrates schematically a cross-section of another embodiment of the inventive display module;
Fig. 6 illustrates schematically an enlargement of a part of the display module shown in Fig. 5;
Fig. 7 illustrates schematically how incoming light I and reflected light R are reflected due to differences in refraction index between the different layers of the display module of Fig. 5; and
Fig. 8 schematically illustrates the basic structure of a type of polymer light emitting diode on which an embodiment of the invention may be based.

### Detailed description of preferred embodiments

The present description relates to the field of display modules for use in electronic devices, and in particular radio communication terminals. The term radio terminal or communication terminal, also denoted terminal in short in this disclosure, includes all mobile equipment devised for radio communication with a radio station, which radio station also may be mobile terminal or e.g. a stationary base station. Consequently, the term radio terminal includes mobile telephones, pagers, communicators, electronic organisers, smart phones, PDA:s (Personal Digital Assistants), laptop computers, and DECT terminals (Digital Enhanced Cordless Telephony). Hence, although the structure and characteristics of the invention are mainly described herein, by way of example, in the implementation in a mobile phone, this is not to be interpreted as excluding the embodiment and implementation of the invention in other types of electronic devices. In particular, the invention is suitable for use, though not restricted thereto, in any electronic devices where the brightness and reflectance properties of the display module, and small dimension are important. Further, the present invention is equally applicable to stationary devices and for radio transmission to and from stationary devices. Such stationary devices include e.g. desktop computers. Furthermore, it should be emphasised that the term comprising or comprises, when used in this description and in the appended claims is taken to specify the presence of stated features, integers, steps or components but does not preclude the presence or addition of one or more other features, integers, steps, components or groups thereof. The term match, matches or matching when used in this description text is taken to specify that the refraction indexes of two layers of material correspond to each other in such a way that reflection in the interface between the two layers is eliminated or at least minimised. In embodiments of the invention, the refraction indexes of two layers of material match each other if the difference in refraction index between the two layers is less than 0.3, preferably less than 0.1, and more preferably less than 0.05. It should also be emphasised that the term substantially equal, when used in expressions such as "the refraction index of a first layer of material is substantially equal to the refraction index of a second layer of material" is used to specify that the difference in refraction indexes between the two layers is less than 0.3, preferably less than 0.1, and more preferably less than 0.05.

Prior art and exemplary embodiments of the invention will now be described with references made to the accompanying drawing. In the figures, the same reference numerals are used for the same or corresponding components or parts.

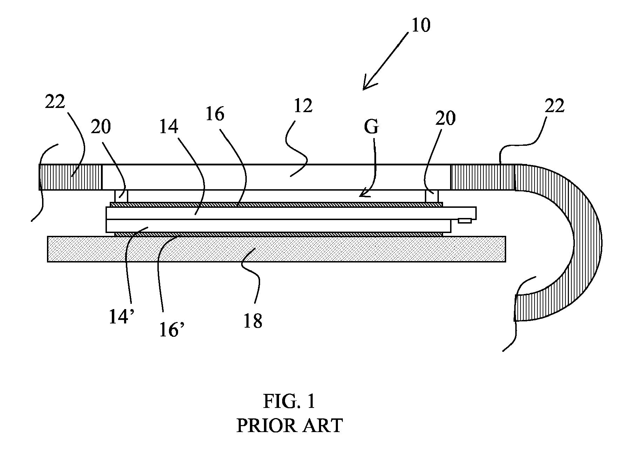

Fig. 1 illustrates in a schematic way a cross-sectional view of a prior art display module 10. The display module 10 comprises a front window 12 forming part of or being attachable to a part of a housing 22, and a display unit such as a liquid crystal display (LCD). The LCD comprises e.g. a thin film of liquid crystal (not shown) that is sandwiched between a front glass 14 and a rear glass 14', forming a liquid crystal cell. Electrodes for controlling the liquid crystals are typically coated on the inner faces of the front and rear glasses, and can for example consist of a thin metal or oxide. The liquid crystal cell is placed between a top polarizer 16 and a rear polarizer 16'. Liquid crystal displays are well known in the art and will not be described in more detail here.

The display module 10 is provided with an air gap G between the front window 12 and the top polarizer 16 to make sure that the plastic window 12 can flex without touching the polarizer 16.

A dust gasket 20 arranged to prevent dust from entering in the gap between the display unit and the front window 12, also acts as a spacer between the front window 12 and the polarizer 16.

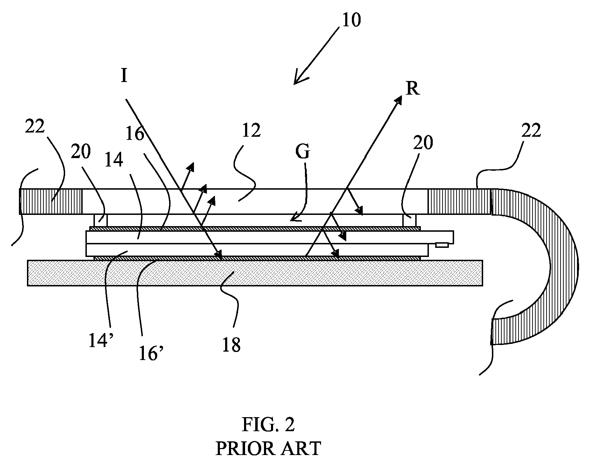

Fig. 2 illustrates schematically how incoming light I and reflected light R are reflected due to differences in refraction index between the different layers of the prior art display module of Fig. 1. As illustrated in Fig. 2 incoming light I will be reflected three times, not counting the crystal layer, firstly in the interface between the surrounding air and the top surface of the front window 12; secondly, in the interface between the bottom surface of the front window 12 and the air in the air gap G; and thirdly, between the air in the air gap G and the polarizer 16. The reflected light R will be reflected as shown in Fig. 2.

When light passes through different layers of medium there will be a luminance loss due to reflection in each junction between a first medium and a second medium when the refraction index differs between the two media. This is for example the case for light in the interface between air and plastic. Depending on the angle of incidence, the reflection of the light will differ. In a perpendicular angle of incidence, the loss will be minimized. The reflection in the interface between air and glass or plastic is typically about 4 %, when the angle of incidence is perpendicular.

The present invention overcomes the above-mentioned problems with the prior art by minimizing the reflection of light between different material layers of the display module. This is achieved by minimizing the difference in refraction index between adjacent layers of material, whereby the reflected light R will be minimized according to the formula: R = [(n₂ - n₁)/(n₂ + n₁)]², where n₁ is the refraction index of the first layer of material and n₂ is the refraction index of the second layer of material.

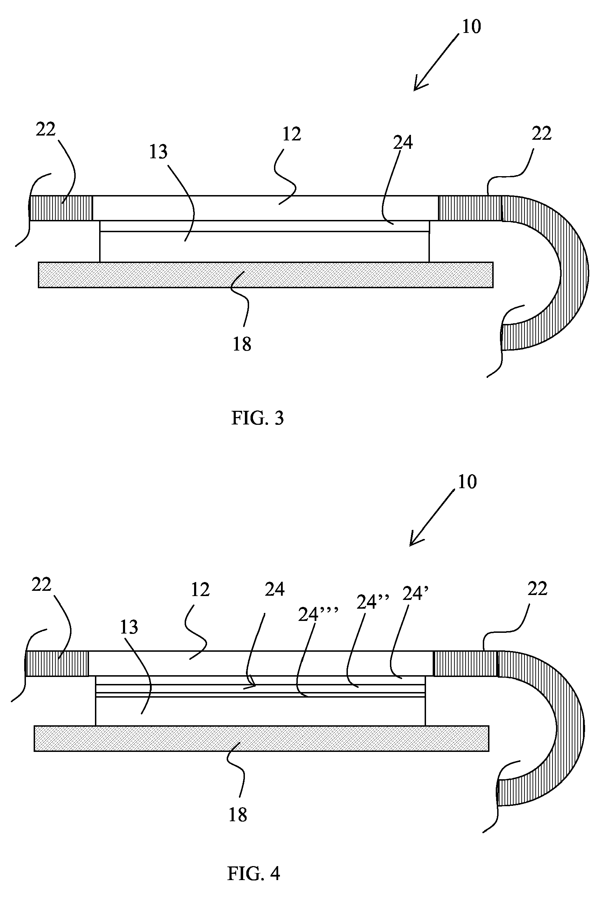

Fig. 3 illustrates in a schematic way a cross-sectional view of an embodiment of the inventive display module 10. The display module 10 comprises a front window 12 attachable to, or forming part of, a part of a housing 22 of an electronic device and a display unit 13. An intermediate layer 24 is sandwiched between the front window 12 and the display unit 13. The intermediate layer 24 is formed by a material selected in dependence of the material of the front window 12 in order to minimize reflection in the interface between the front window 12 and the intermediate layer 24.

In one embodiment of the invention, the front window is manufactured of polymethyl methacrylate, such as PMMA SH 200, having a refraction index of approximately 1.5. PMMA SH 200 has typically a refraction index in the range of 1.49 ― 1.52. Other suitable materials are Plexiglass^{®} or Plexiglass-based materials having a refraction index matching the refraction index of the display unit.

The intermediate layer 24 is preferably selected from a material such that it has a refraction index nᵢₗ that matches the refraction index n_{fw} of said front window 12. Thus, the intermediate layer 24 is preferably configured of a transparent material having substantially the same refraction index as the front window 12. The intermediate layer 24 is for example constituted of a transparent film, an immersion oil, a transparent glue or another suitable material having a refraction index matching the refraction index of the display unit. As is well known, such an oil or glue can be tailor-made to obtain a certain refraction index.

According to one embodiment of the invention, the front window, the intermediate layer and the display unit have a refraction index of approximately 1.5.

The display unit 13 and the intermediate layer 24 can be arranged air-tight.

In one embodiment of the invention, the top surface of the front window 12 has anti-reflex coating in order to further improve the ratio between the reflected light containing picture information and the reflected light without picture information. The display unit 13 can further be configured for attachment at a carrier frame 18 such as a Printed Wiring Board PWB.

The front window 12 is preferably attachable to a housing portion 22 of said electronic device. The electronic device can for example be realised as a mobile radio terminal or a mobile phone.

Fig. 4 illustrates schematically a cross-sectional view of an embodiment of the inventive display module 10, wherein the intermediate layer 24 comprises a number of different sub-layers. The materials of the sub-layers are selected in such a way that the refraction indexes are stepwise changing from the value of top sub-layer 24' towards the refraction index of the bottom sub-layer 24''', whereby no light or a small amount of light is reflected in each interface. Thus, the reflection in the interfaces between the front window 12 and the top sub-layer 24', between the different sub-layers, and between the bottom sub-layer 24''' and the display unit 13 are minimized. In the shown embodiment three different sub-layers 24', 24" and 24''' are illustrated. It should however be understood that the intermediate layer could be one single layer of material, or two or more layers of material.

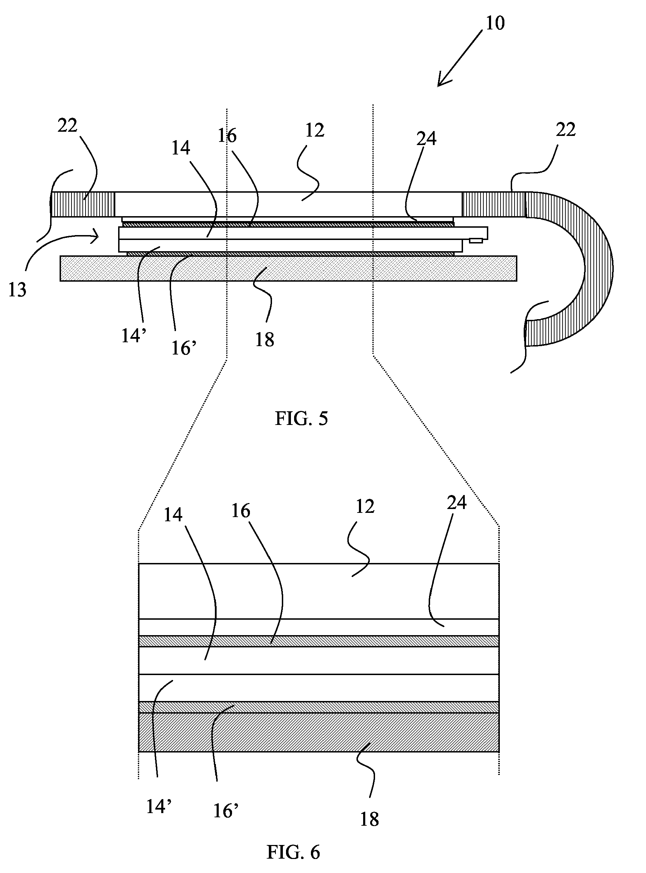

Fig. 5 illustrates in a schematic way a cross-sectional view of an embodiment of the inventive display module 10. In this embodiment, the display unit 13 is typically a LCD, comprising a pair of glass plates; i.e. a front glass 14, and a rear glass 14', and a polarizer 16. The polarizer 16 is arranged between the front window 12 and the front glass 14. The intermediate layer 24 is arranged between the front window 12 and the polarizer 16.

In a special case, the glass plates 14, 14' are configured to have a refraction index n_{d} substantially equal to the refraction index n_{fw} of the front window 12. The refraction indexes n_{d}, n_{fw} being approximately 1.5.

The display unit 13 can further comprise a bottom polarizer 16', which is arranged between the rear plate 14' and a carrier frame 18.

Fig. 6 illustrates schematically an enlarged view of the embodiment of the display module of Fig. 5.

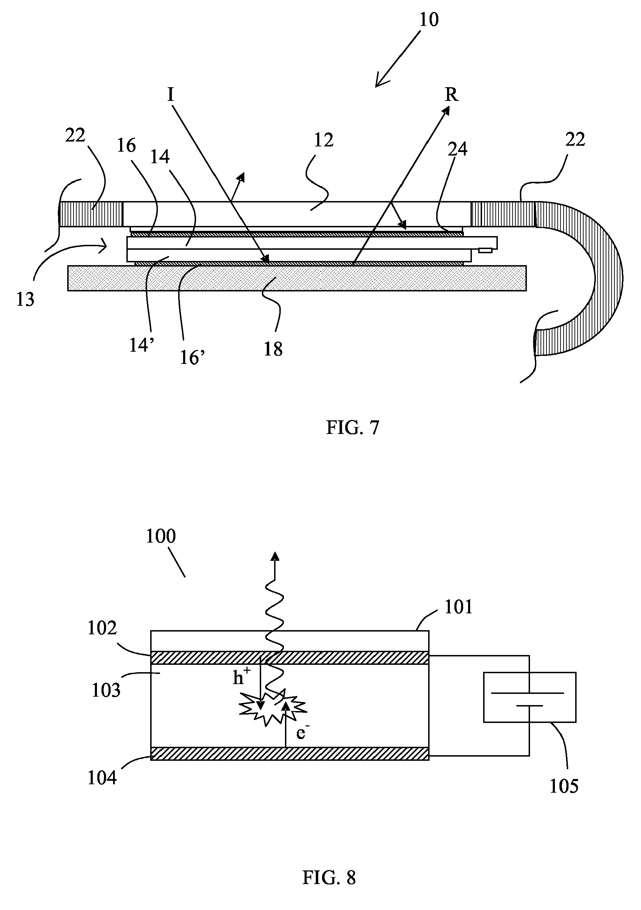

Fig. 7 illustrates schematically how incoming light I and reflected light R are reflected due to differences in refraction index between the different layers of the display module of Fig. 6. However, since the mismatch in refraction index has been eliminated, or at least substantially minimised, the incoming light I is mainly only reflected once before it enters the display unit, i.e. the incoming light is only reflected in the interface between the surrounding air and the top surface of the front window 12. In correspondence, the reflected light R leaving the display device 13 is only reflected once, i.e. in the interface between the top surface of the front window 12 and the surrounding air.

The present invention has been described above with the reference to a display unit realised in the form of a liquid crystal display or a liquid crystal module. However, the display unit can also be realized as any kind of a Flat Panel Display FPD, e.g. Thin Film Transistor TFT, Twisted Nematic TN display, Super Twisted Nematic STN display, Color STN CSTN display, Organic Light Emitting Diode OLED, or plasma display. In an alternative embodiment the display unit is realized as a Cathode Ray Tube CRT.

Fig. 8 illustrates a polymer film light emitting diode 100, the technology of which can realise the display unit in embodiments of the inventive display module. Such a type of device is a PLED or an OLED. PLED is a backlighting, illumination and display technology which has had an enormous development during recent years, and the basic function is described with reference to Fig. 8. A PLED comprises a thin layer 103 of polymer, preferably an undoped conjugated polymer, which is sandwiched between an anode 102 and a cathode 104. Examples of polymers which have been used in different applications include poly-p-phenylene vinylene (PPV), poly-p-phenylenebenzobisthiazole (PBT) and poly-p-phenylenebenzobis-oxazole (PBO). The polymer of layer 103 emits light when exposed to electricity. When electrons e⁻ and holes h⁺ are injected respectively from cathode 104 and anode 102 into the molecular polymer layer or layers 103 by means of a bias voltage supplied by a DC driver unit 105, these two types of carriers migrate towards each other and a fraction of them recombine to form light emission.

At least one of the electrodes 102, 104 is transparent to the emitted light, in general the anode 102. In one typical embodiment, anode 102 is a substrate of transparent indium-tin-oxide (ITO), whereas the cathode 104 may be a layer of aluminium. In various types of PLEDs described in the prior art, additional layers of material may be included between the electrodes 102, 104, e.g. for enhancing the electron or the hole injection efficiency. It has for instance been proposed to insert a thin layer of LiF, Al2O3 or Ca between polymer layer 103 and cathode 104 to enhance the electron injection efficiency. A transparent protective layer 101 is preferably applied over the anode 102. In reality, the protective layer 101 is often a glass substrate, whereas the ITO substrate is used as a base on which the other layers are applied by spinning and evaporation deposition, in a manner well known to the skilled person.

The present invention has been exemplified using a LCD, a PLED, or an OLED. However, it should be understood that the invention is applicable in other kinds of display units suitable for use in electronic devices.

The principles of the present invention have been described in the foregoing by examples of embodiments or modes of operations. However, the invention should not be construed as being limited to the particular embodiments discussed above, which should be regarded as illustrative rather than restrictive, and it should be appreciated that variations may be made in those embodiments by workers skilled in the art without departing from the scope of the present inventions, as defined by the following claims.

## Claims

1. Display module (10) for use in an electronic device, comprising a front window (12) and a display unit (13, 100), **characterised in that** an intermediate layer (24) of a transparent material is sandwiched between said front window (12) and said display unit (13, 100), said intermediate layer (24) being formed of a material selected in dependence of the material of the front window (12) in order to minimize reflection in the interface between said front window (12) and said intermediate layer (24).

2. Display module (10) according to claim 1, **characterised in that** said intermediate layer (24) has a refraction index nᵢₗ that matches the refraction index n_{fw} of said front window (12).

3. Display module (10) according to claim 1 or 2, **characterised in that** said intermediate layer (24) has a refraction index matching the refraction index of a top portion (16) of said display unit (13, 100).

4. Display module (10) according to any of the preceding claims, **characterised in that** said intermediate layer (24) is constituted of sub-layers (24', 24", 24'''), wherein a top sub-layer (24') has a refraction index that matches said front window (12), a bottom sub-layer (24''') has a refraction index that matches said display unit (13, 100), and a possible intermediate sub-layer (24") has a refraction index that matches both a sub-layer located above the intermediate sub-layer and a sub-layer located below the intermediate sub-layer.

5. Display module (10) according to claim 4, **characterised in that** the materials of said sub-layers (24', 24", 24''') are selected in such a way that the refraction indexes are stepwise changing from the refraction index of top sub-layer (24') towards the refraction index of the bottom sub-layer (24''').

6. Display module (10) according to any of the preceding claims, **characterised in that** said intermediate layer (24) is a transparent film.

7. Display module (10) according to any of the preceding claims, **characterised in that** said intermediate layer (24) is an immersion oil:

8. Display module (10) according to any of the preceding claims, **characterised in that** said intermediate layer (24) is a transparent glue.

9. Display module (10) according to any of the preceding claims, **characterised in that** said display unit (13, 100) has a refraction index n_{d} substantially equal to the refraction index n_{fw} of said front window (12), said refraction indexes n_{d}, n_{fw} being approximately 1.5.

10. Display module (10) according to any of the preceding claims, **characterised in that** said display unit (13, 100) and said intermediate layer (24) are arranged air-tight.

11. Display module (10) according to any of the preceding claims, **characterised in that** the top surface of said front window (12) has an anti-reflex coating.

12. Display module (10) according to any of the preceding claims, **characterised in that** said front window (12) is attachable to a housing portion (22) of said electronic device.

13. Display module (10) according to any of the preceding claims, **characterised in that** said display module (10) is attachable and detachable from an electronic device.

14. Display module (10) of any of the preceding claims, **characterised in that** said electronic device is a mobile radio terminal.

15. Display module (10) of any of the preceding g claims, **characterised in that** said electronic device is a mobile phone.

16. Electronic device comprising a display module (10) according to any of the claims 1 - 15.
